# EUROPÄISCHE PATENTANMELDUNG

(11) **EP 4 321 324 A1**
(43) Veröffentlichungstag der Anmeldung: **14.02.2024**
(21) Anmeldenummer: 22189950.3
(22) Anmeldetag: 11.08.2022
(51) Int. Cl.: B29C 51/30, B29C 51/20, B29C 51/10, B29C 51/44, B29C 33/30, B29C 49/42

(54) **ANORDNUNG FÜR EINE VERPACKUNGSMASCHINE**

(71) Anmelder: Harro Höfliger Verpackungsmaschinen GmbH, 71573 Allmersbach im Tal (DE)
(72) Erfinder: Thaler, Andreas, 71573 Allmersbach im Tal (DE); Birkhold, Daniel, 71573 Allmersbach im Tal (DE)
(74) Vertreter: Neu, Felix

(57) **Zusammenfassung**

Die Erfindung betrifft eine Anordnung für eine Verpackungsmaschine umfassend: eine Formatplatte (9) mit mindestens einer Matrizenform (10), eine Trägerplatte (11), wobei die Formatplatte (9) auf der Trägerplatte (11) befestigbar ist, wobei die Anordnung (15) mindestens eine in eine Sperrstellung (32) und in eine Freigabestellung (33) schaltbare Befestigungsvorrichtung (20) zur Sicherung der Formatplatte (9) auf der Trägerplatte (11) umfasst, wobei die Befestigungsvorrichtung (20) derart ausgebildet ist, dass die Befestigungsvorrichtung (20) in der Sperrstellung (32) die Formatplatte (9) auf der Trägerplatte (11) fixiert und in der Freigabestellung (33) die Formatplatte (9) von der Trägerplatte (11) löst.

## Beschreibung

Die Erfindung betrifft eine Anordnung für Verpackungsmaschinen mit den Merkmalen nach dem Oberbegriff des Anspruchs 1.

In verbreiteter Ausführung werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Insbesondere im Haushaltsbereich werden in vorgenannter Weise Einzeldosen von Wasch- oder Spülmittel mittels zweier Bahnen von wasserlöslicher Folie verpackt. Für die industrielle Massenfertigung kommen Verpackungsmaschinen in einem insbesondere kontinuierlichen, nicht getakteten Betrieb zum Einsatz. Hierbei läuft ein Transporteur beispielsweise in Form einer Kette vorzugsweise kontinuierlich um ein feststehendes Maschinengestell um, wobei der Transporteur auf der oberen Bearbeitungsseite eine geradlinige, horizontale Wegstrecke zurücklegt. Gemeinsam mit dem Transporteur werden sogenannte Formatplatten bevorzugt kontinuierlich umlaufend mitbewegt. Synchron zu der Bewegung der Formatplatten wird eine erste Folienbahn bevorzugt kontinuierlich zugeführt und auf die Oberseite der Formatplatten aufgelegt. In den Formatplatten sind mehrere Matrizenformen ausgeformt, die für den Tiefziehvorgang und auch für den Vorgang des Befüllens eine zentrale Rolle spielen.

In einer vorbekannten Bauform kommt eine Tiefziehvorrichtung mit einer Formstation zum Einsatz, welche sich nur über eine Teilstrecke synchron mit der jeweiligen Formatplatte von einer Startposition zu einer Endposition mitbewegt und dann zyklisch wieder zurück zur Startposition gefahren wird. Gleichzeitig wird der Transport der Formatplatten und der Folienbahn weiter vorzugsweise kontinuierlich aufrechterhalten. Während des Mitlaufens von der Startposition zur Endposition wird die Folienbahn zunächst auf eine solche Temperatur erwärmt, dass sie sich plastisch verformen lässt. Die solchermaßen verformte Folie wird nun mittels eines aufgebrachten Formvakuums in die Matrizenform tiefgezogen. Nach dem Tiefziehen fährt die Formstation zurück zu ihrer Startposition, um dort den nächsten Abschnitt der Folienbahn aufzuheizen und in die Matrizenformen einer nachfolgenden Formatplatte tiefzuziehen.

Zur Herstellung solcher Verpackungseinheiten umfassen Verpackungsmaschinen üblicherweise 170 bis 220 Formatplatten. Soll eine neue Verpackungseinheit auf der Verpackungsmaschine hergestellt werden, sind andere Formatplatten mit anderen Matrizenformen in der Verpackungsmaschine einzusetzen. Hierfür sind sämtliche auf der Verpackungsmaschine befestigten Formatplatten gegen neue Formatplatten auszutauschen. Ein solcher Rüstvorgang an der Verpackungsmaschine ist äußerst zeitintensiv. Während des Rüstvorganges ist die Verpackungsmaschine außer Betrieb, die Herstellung von Verpackungseinheiten ist dann selbstverständlich nicht mehr möglich.

Aufgabe der Erfindung ist es daher, eine Anordnung für eine Verpackungsmaschine anzugeben, die eine Verkürzung der Rüstzeiten für eine Verpackungsmaschine ermöglicht.

Diese Aufgabe wird durch eine Anordnung für eine Verpackungsmaschine gemäß den Merkmalen des Anspruchs 1 gelöst.

Die erfindungsgemäße Anordnung für eine Verpackungsmaschine umfasst eine Formatplatte mit mindestens einer Matrizenform, und eine Trägerplatte, wobei die Formatplatte auf der Trägerplatte befestigbar ist. Die Anordnung umfasst mindestens eine in eine Sperrstellung und in eine Freigabestellung schaltbare Befestigungsvorrichtung zur Sicherung der Formatplatte auf der Trägerplatte. Die Befestigungsvorrichtung ist derart ausgebildet, dass die Befestigungsvorrichtung in der Sperrstellung die Formatplatte auf der Trägerplatte fixiert und in der Freigabestellung die Formatplatte von der Trägerplatte löst.

Die erfindungsgemäße Anordnung ermöglicht es also, durch das Schalten der Befestigungsvorrichtung von einer Sperrstellung in die Freigabestellung die Formatplatten auf einfache, aber vor allem schnelle Art und Weise von der Trägerplatte zu lösen. Ist die Befestigungsvorrichtung in die Freigabestellung geschaltet, ist die Formatplatte von der Trägerplatte gelöst und kann von dieser heruntergenommen werden. Anschließend kann eine neue Formatplatte auf die Trägerplatte gehoben werden und über das Schalten der Befestigungsvorrichtung in die Sperrstellung auf der Trägerplatte fixiert werden. Für die zum Lösen der aus dem Stand der Technik bekannten Formatplatten musste der Bediener für jede Formatplatte in etwa 30 Schrauben lösen, bevor die Formatplatte von der Trägerplatte heruntergenommen werden konnte. Bei einer Anzahl von 170 bis 220 Formatplatten einer Verpackungsmaschine ist das Lösen der Formatplatten von den Trägerplatten mit einem erheblichen Zeitaufwand verbunden. Durch die erfindungsgemäße Anordnung kann nun die Rüstzeit einer Verpackungsmaschine, die mit entsprechenden Formatplatten bestückt wird, deutlich reduziert werden. Die Rüstzeitverkürzung kommt insbesondere dann zum Tragen, wenn ein Produktwechsel auf der Verpackungsmaschine vorgenommen werden soll oder Wartungsarbeiten an der Verpackungsmaschine durchzuführen sind. Durch die Verkürzung der Rüstzeiten ist die Verpackungsmaschine wieder schnell einsetzbar, wodurch auch die mit der Rüstung der Verpackungsmaschine entstehenden Kosten reduziert werden können.

Es ist vorteilhaft vorgesehen, dass die Befestigungsvorrichtung eine Klemmeinheit und eine Haltekontur aufweist, wobei in der Sperrstellung die Klemmeinheit und die Haltekontur in Wirkverbindung stehen, und in der Freigabestellung die Wirkverbindung zwischen der Klemmeinheit und der Haltekontur aufgehoben ist. Besonders bevorzugt ist die Klemmeinheit zwischen der Sperrstellung und der Freigabestellung um eine Drehachse hin und her schwenkbar. In einer alternativen Ausgestaltung der Anordnung kann es ggf. zweckmäßig sein, die Klemmeinheit derart auszugestalten, dass diese zwischen der Sperrstellung und der Freigabestellung linear hin und her bewegbar ist. Auch andere Schaltbewegungen der Klemmeinheit zwischen der Sperrstellung und der Freigabestellung sind denkbar.

Die Befestigungsvorrichtung umfasst vorzugsweise zwei Anschläge zur Begrenzung der Schwenkbewegung der Klemmeinheit. Bevorzugt vorgesehen ist, dass der erste Anschlag der zwei Anschläge die Schwenkbewegung der Klemmeinheit in der Freigabestellung und der zweite Anschlag der zwei Anschläge die Schwenkbewegung der Klemmeinheit in der Sperrstellung begrenzen. Die zwei Anschläge verkürzen die Schwenkbewegung der Klemmeinheit und lassen den Bediener wissen, wann die Befestigungsvorrichtung in die Freigabestellung oder die Sperrstellung geschaltet ist. Dies vereinfacht dem Bediener den Umgang mit der Befestigungsvorrichtung. Die Klemmeinheit ist bevorzugt als Klemmbolzen ausgebildet. Durch die Ausbildung als Klemmbolzen ist die Umsetzung einer Schwenkbewegung auf einfache Art und Weise möglich.

Die Klemmeinheit ist bevorzugt an der Trägerplatte angeordnet. Da die Klemmeinheit das zu verschwenkende Bauteil der Befestigungsvorrichtung ist, ist dieses in aller Regel im Vergleich zu der Haltekontur das komplexere Bauteil. Um also die deutlich häufiger auszutauschenden Formatplatten möglichst einfach zu gestalten, ist die Klemmeinheit eben an der Trägerplatte ausgebildet. Die Haltekontur ist somit vorzugsweise an der Formatplatte angeordnet. Die Klemmeinheit ist bevorzugt über eine Federeinheit gegen die Trägerplatte gespannt. Die Federeinheit ist bevorzugt aus mindestens einer Tellerfeder, vorzugsweise aus mindestens zwei Tellerfedern gebildet. Sind mehrere Tellerfedern als Federeinheit vorgesehen, sind diese bevorzugt parallel zueinander geschaltet. Auch die Verwendung anderer Federelemente kann zweckmäßig sein. Durch den Einsatz der Federeinheit ist die Klemmeinheit an der Trägerplatte vorgespannt. Wird die Klemmeinheit in die Sperrstellung geschwenkt, greift diese in die Haltekontur der Formatplatte ein. Durch die Vorspannung der Klemmeinheit wird auch die Formatplatte in der Sperrstellung der Befestigungsvorrichtung gegen die Trägerplatte gedrückt.

Die Haltekontur ist bevorzugt aus einem Halteelement gebildet, wobei das Halteelement an der Formatplatte befestigt ist. Die Haltekontur bildet bevorzugt einen Vorsprung gegenüber der Formatplatte. Durch die separate Ausbildung des Halteelementes gegenüber der Formatplatte ist eine einfache und kostengünstige Herstellung der Anordnung sichergestellt.

Zwischen der Trägerplatte und der Formatplatte ist ein Vakuum zu transportieren, das an den Matrizenformen der Formatplatte angelegt wird. Zur Vermeidung einer Leckage zwischen der Formatplatte und der Trägerplatte, ist eine umlaufende Dichtung zwischen der Formatplatte und der Trägerplatte vorgesehen. Somit kann ein hohes Vakuum bei vergleichsweise geringem Energieverbrauch sichergestellt werden.

Besonders bevorzugt ist vorgesehen, dass die Anordnung einen Transporteur mit einem Mitnehmer zur Fortbewegung der Trägerplatte und der Formatplatte umfasst, und mit einer Sicherungsvorrichtung zur Befestigung der Trägerplatte auf dem Mitnehmer des Transporteurs, wobei die Sicherungsvorrichtung derart ausgebildet ist, dass in einer Betriebsstellung der Sicherungsvorrichtung die Trägerplatte an dem Mitnehmer fixiert ist und in einer Außerbetriebsstellung der Sicherungsvorrichtung die Trägerplatte von dem Mitnehmer gelöst ist.

Ist die Trägerplatte beispielsweise auch zu Wartungsgründen oder ähnlichem von dem Transporteur zu lösen, kann dies auf einfache Art und Weise durch das Betätigen der Sicherungsvorrichtung erfolgen. Die Sicherungsvorrichtung umfasst vorzugsweise einen Kugelsperrbolzen. Bevorzugt ist an dem Mitnehmer des Transporteurs eine Sicherungskontur vorgesehen, wobei in der Betriebsstellung der Sicherungsvorrichtung der Kugelsperrbolzen mit der Trägerplatte und der Sicherungskontur derart wirkverbunden ist, dass die Trägerplatte an dem Mitnehmer fixiert ist. Durch den Kugelsperrbolzen kann auf einfache Weise die Trägerplatte auf dem Mitnehmer des Transporteurs gesichert werden. Derartige Kugelsperrbolzen sind aus dem Stand der Technik hinreichend bekannt.

Ein Ausführungsbeispiel der Erfindung wird nachfolgend anhand der Zeichnung näher beschrieben. Es zeigen:
- Fig. 1: in einer seitlichen Ausschnittsdarstellung eine Verpackungsmaschine mit einem umlaufend bewegten Transporteur sowie mit zyklisch mitbewegten Form- und Siegelstationen,
- Fig. 2: in einer perspektivischen Darstellung eine erfindungsgemäße Anordnung für eine Verpackungsmaschine mit einer Trägerplatte und einer Formatplatte in Sperrstellung,
- Fig. 3: in einer perspektivischen Darstellung die Anordnung nach Fig. 2 mit gelöster Formatplatte,
- Fig. 4: in einer perspektivischen, ausschnittsweisen Darstellung die Anordnung nach Fig. 2 in Sperrstellung,
- Fig. 5: in einer Draufsicht die Anordnung nach Fig. 2 in Sperrstellung,
- Fig. 6: in einer Draufsicht die Anordnung nach Fig. 2 in Freigabestellung,
- Fig. 7: in einer Schnittdarstellung die Anordnung nach Fig. 2 mit einer Federeinheit in Sperrstellung,
- Fig. 8: in einer Schnittdarstellung die Anordnung nach Fig. 2 mit einer Dichtung zwischen der Formatplatte und der Trägerplatte und
- Fig. 9: in einer weiteren Schnittdarstellung eine Sicherungsvorrichtung zur Fixierung der Trägerplatte auf einem Mitnehmer des Transporteurs.

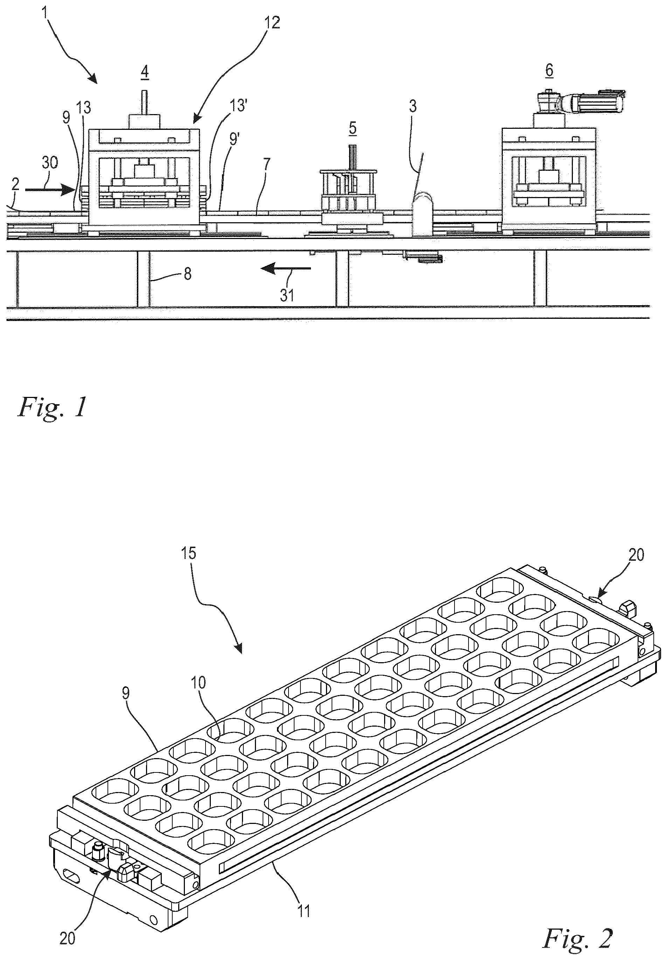

Fig. 1 zeigt in einer Seitenansicht einen Ausschnitt aus einer erfindungsgemäßen Verpackungsmaschine 1 zur Herstellung von gefüllten Beuteln. Hierzu umfasst die Verpackungsmaschine 1 ein Maschinengestell 8, eine Formstation 4, eine Füllstation 5 und eine Siegelstation 6. Eine Folie 2 wird der Verpackungsmaschine 1 zugeführt und in der Formstation 4 tiefgezogen, so dass sich in der Folienbahn 1 Kavitäten ausbilden. Die Folie 2 ist im vorliegenden Ausführungsbeispiel als Folienbahn ausgebildet. Es kann auch zweckmäßig sein, der Verpackungsmaschine eine Folienplatte zuzuführen.

Die Kavitäten werden in der Füllstation 5 mit einem Produkt befüllt. Hieran anschließend wird eine Deckfolie 3 zugeführt und in der Siegelstation 6 auf die Folienbahn 1 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folie 2 und bei der Deckfolie 3 um wasserlösliche Folien, namentlich um PVOH-Folien, zwischen denen beispielsweise ein Wasch- oder Reinigungsmittel verpackt wird. Solchermaßen hergestellte Folienbeutel werden beispielsweise in eine Spülmaschine eingelegt. Dort löst sich das Folienmaterial bei Wasserkontakt auf und gibt das enthaltene Spülmittel frei. Sinngemäß das gleiche gilt für den Einsatz eines solchen Folienbeutels in einer Waschmaschine.

Die Verpackungsmaschine 1 umfasst das ortsfest montierte Maschinengestell 2 sowie einen bevorzugten kontinuierlich angetriebenen Transporteur 7. Der Transporteur 7 kann ein Förderband oder dergleichen sein und ist im bevorzugten Ausführungsbeispiel durch gelenkig und kettenartig miteinander verbundene Elemente gebildet, auf denen mehrere Formatplatten 9, 9' montiert sind. Letztere werden zusammen mit dem Transporteur 7 bevorzugt kontinuierlich und um das Maschinengestell 8 umlaufend angetrieben, wobei sie sich für den eigentlichen Herstellvorgang der Beutel auf einer oberen horizontalen Bahn entsprechend einem Pfeil 30 bewegen und nach entsprechender Umlenkung anschließend im unteren Bereich des Maschinengestells 8 entsprechend einem Pfeil 31 zurückgeführt werden. Ebenso bevorzugt kontinuierlich wird die Folie 2, eine bevorzugt endlose Folienbahn, zugeführt und von oben auf den Transporteur 7 mit den Formatplatten 9, 9' aufgelegt. Zwischen der Füllstation 5 und der Siegelstation 6 wird später noch die Deckfolie 3 bevorzugt kontinuierlich zugeführt und von oben auf die Oberseite der Folie 2 aufgelegt. Die Folie 2 und die Deckfolie 3 werden im aufgelegten Zustand entsprechend dem Pfeil 30 synchron und bevorzugt kontinuierlich mit dem Transporteur 7 mitbewegt.

Die Station zur Zufuhr der Folie sowie die Station zur Zufuhr der Deckfolie 3 sind ortsfest am Maschinengestell 8 montiert, ebenso wie nicht dargestellte Stationen für Wasserauftrag zur Unterstützung des Siegelvorgangs sowie für das Perforieren bzw. seitliche Beschneiden der Folien. In einer bevorzugten Ausführung der Verpackungsmaschine 1 ist die Bewegung des Transporteurs kontinuierlich. In einer solchen Ausführung der Verpackungsmaschine 1 arbeiten die hier durchgeführten Prozesse ebenso kontinuierlich. Um eine kontinuierliche Bewegung ausführen zu können, sind die Formstation 4, die Füllstation 5 und die Siegelstation 6 nicht ortsfest relativ zum Maschinengestell 8 positioniert, sondern werden abschnittsweise über eine bestimmte Wegstrecke synchron mit dem Transporteur 7 mitgefahren. Währenddessen erfolgt in der Formstation 4 das Tiefziehen der Folie 2, in der Füllstation 5 das Einfüllen des zu verpackenden Produkts in die tiefgezogenen Kavitäten und in der Siegelstation 6 das Aufsiegeln der Deckfolie 3 auf die untere Folie 2. Nach Beendigung des jeweiligen Vorgangs werden die Formstation 4, die Füllstation 5 und die Siegelstation 6 zyklisch wieder zurück auf ihre Ausgangsposition verfahren, und ein neuer Zyklus des jeweils ausgeführten Prozesses beginnt. Wie in Fig. 1 gezeigt, ist die Formstation 4 durch eine Tiefziehvorrichtung 12 gebildet. Die Tiefziehvorrichtung 12 kann so ausgelegt sein, um eine einzelne Formatplatte 9, 9' aufzunehmen und dort die Folie 2 in einem Zyklus tiefzuziehen. Im gezeigten Ausführungsbeispiel ist die Tiefziehrichtung 12 zur gleichzeitigen Aufnahme von mehreren, hier vier aufeinanderfolgenden Formatplatten 9, 9' ausgelegt.

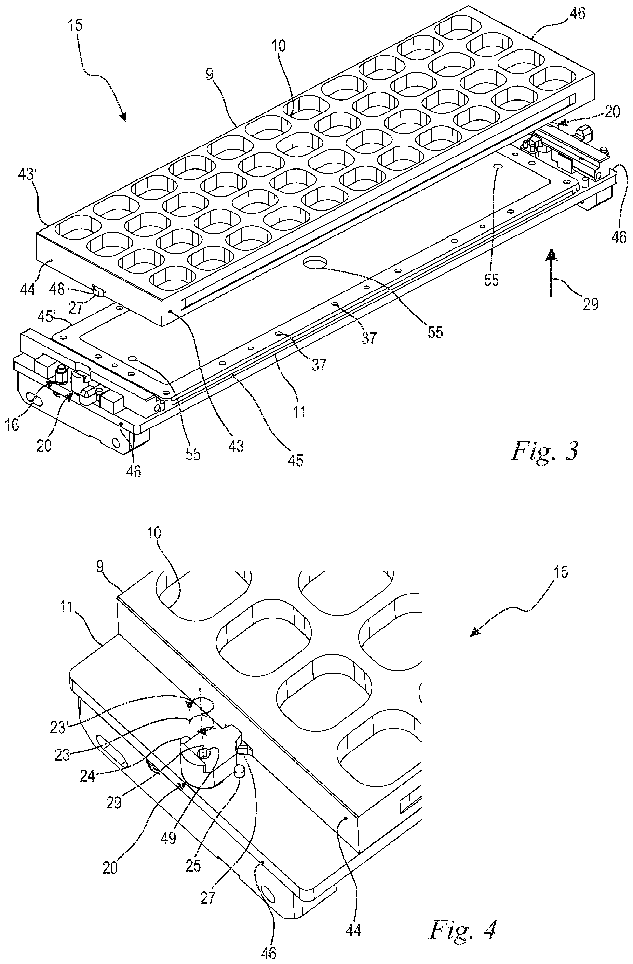

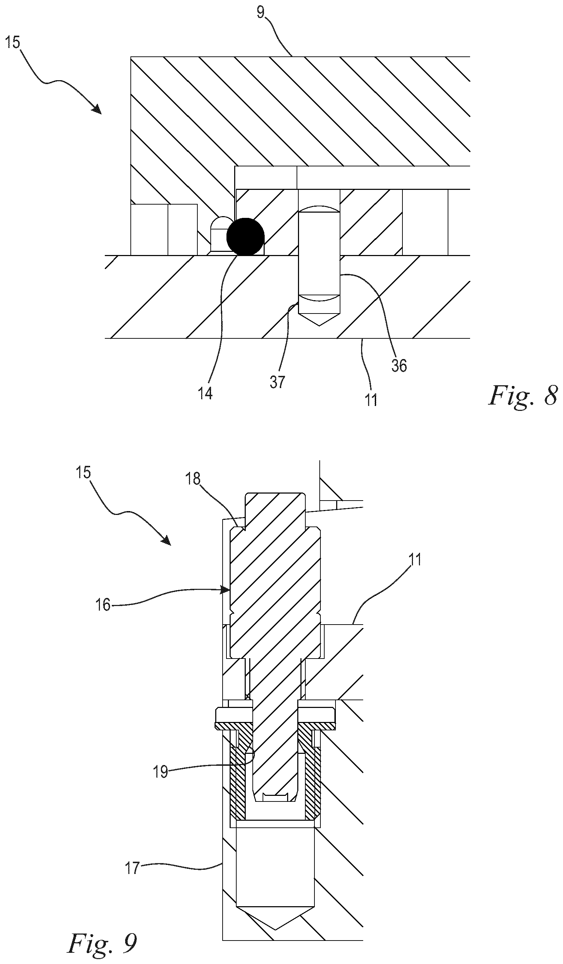

Fig. 2 zeigt die erfindungsgemäße Anordnung 15 für die Verpackungsmaschine 1. Die Anordnung 15 umfasst die Formatplatte 9. Die Formatplatte 9 umfasst eine Oberseite 38 und eine Unterseite 39. An der Formatplatte 9 ist mindestens eine Matrizenform 10 ausgebildet. Die Matrizenform 10 ist an der Oberseite 38 der Formatplatte 9 ausgebildet. Im vorliegenden Ausführungsbeispiel sind 44 Matrizenformen 10 an der Formatplatte 9 ausgebildet. Es kann selbstverständlich auch zweckmäßig sein, eine andere Anzahl von Matrizenformen 10 an der Formatplatte 9 vorzusehen. Ferner umfasst die Anordnung 15 eine Trägerplatte 11. Die Trägerplatte 11 ist Teil des Transporteurs 7. Die Formatplatte 9 ist bevorzugt unmittelbar auf der Trägerplatte 11 angeordnet. Die Trägerplatte 11 umfasst eine Oberseite 40 und eine Unterseite 41. Die Formatplatte 9 ist mit ihrer Unterseite 39 auf der Oberseite 40 der Trägerplatte 11 angeordnet. Ferner umfasst die Anordnung eine Vielzahl von Passstiften 36 (Fig. 8), die zur gegenseitigen Ausrichtung der Formatplatte 9 und der Trägerplatte 11 dienen. Wie in Fig. 3 gezeigt, sind an der Oberseite 40 der Trägerplatte 11 eine Vielzahl von Öffnungen 37 vorgesehen, die zur Aufnahme der Passstifte 36 (Fig. 8) dienen. Zudem sind an der Unterseite 39 der Formatplatte 9 Öffnungen 42 vorgesehen, die ebenfalls zur Aufnahme der Passstifte 36 dienen.

Wie in den Figuren 2 und 3 gezeigt, umfasst die Anordnung 15 eine Befestigungsvorrichtung 20. Mittels der Befestigungsvorrichtung 20 wird die Formatplatte 9 auf der Trägerplatte 11 gesichert. Die Befestigungsvorrichtung 20 sichert die Formatplatte 9 auf der Trägerplatte 11 gegen eine Bewegung in eine Hochrichtung 29 ab. Die Hochrichtung 29 verläuft von der Unterseite 39 der Formatplatte 9 zur Oberseite 38 der Formatplatte 9. Die Hochrichtung 29 entspricht vorzugsweise einer Vertikalrichtung, demnach ist die Hochrichtung 29 der Schwerkraft entgegengerichtet.

Wie in Fig. 4 gezeigt, umfasst die Befestigungsvorrichtung 20 eine Klemmeinheit 21 und eine Haltekontur 27. In der bevorzugten Ausführung der Anordnung 15 ist die Klemmeinheit 21 an der Trägerplatte 9 angeordnet, die Haltekontur 27 ist bevorzugt an der Formatplatte 9 angeordnet. In einer alternativen Ausführung der Anordnung kann es auch zweckmäßig sein, die Klemmeinheit 21 an der Formatplatte 9 und die Haltekontur 27 an der Trägerplatte 11 vorzusehen. Wie in der Fig. 3 gezeigt, sind in der bevorzugten Ausführung der Anordnung 15 an der Trägerplatte 11 zwei Klemmeinheiten 21 vorgesehen. An der Formatplatte 9 sind bevorzugt zwei Haltekonturen 27 vorgesehen. Neben der Oberseite 40 und der Unterseite 41 besitzt die Trägerplatte 11 zwei Längsseiten 45, 45' und zwei Stirnseiten 46, 46'. Auf der Oberseite 40 der Trägerplatte 11 sind jeweils angrenzend an die Stirnseite 46 eine Klemmeinheit 21 angeordnet. Die Formatplatte 9 besitzt neben der Oberseite 39 und der Unterseite 38 ebenfalls zwei Längsseiten 43, 43', an welchen in eingebautem Zustand in der Verpackungsmaschine 1 weitere Formatplatten 9'anliegen, und zwei freie Stirnseiten 44, 44'. Bevorzugt ist an jeder Stirnseite 44, 44' der Formatplatte 9 eine Haltekontur 27 angeordnet. Die Haltekonturen 27 sind bevorzugt an die Unterseite 39 der Formatplatte 9 angrenzend angeordnet.

Wie in Fig. 4 gezeigt, ist die Klemmeinheit 21 um eine Drehachse 22 schwenkbar ausgebildet. Die Drehachse 22 ist bevorzugt parallel zur Hochrichtung 29 ausgerichtet. Die Klemmeinheit 21 ist in eine erste Schwenkrichtung 23 in die Sperrstellung 32 und in eine der ersten Schwenkrichtung 23 entgegengesetzten, zweiten Schwenkrichtung 23' in die Freigabestellung 33 schwenkbar. Die Klemmeinheit 21 umfasst eine Nase 47. In der Sperrstellung 32 greift die Klemmeinheit 21 mit ihrer Nase 47 über die Haltekontur 27. In der Sperrstellung 32 liegt die Nase 47 bezogen auf die Hochrichtung 29 oberhalb der Haltekontur 27, wobei sich die Nase 47 und die Haltekontur 27 bevorzugt flächig kontaktieren. Somit ist die Formatplatte 9 über ihre Haltekonturen 27, die als Vorsprünge 48 gegenüber den Stirnseiten 44, 44' der Formatplatte 9 ausgebildet sind, an den Nasen 47 der Klemmeinheiten 21 in Hochrichtung 29 fixiert. In der Freigabestellung 33 der Befestigungsvorrichtung 20 ist die Nase 47 der Klemmeinheit 21 derart zur Seite geschwenkt, so dass die Haltekontur 27 nicht mehr in Kontakt mit der Nase 47 steht und damit in Hochrichtung 29 freigegeben ist. Die Formatplatte 9 kann von der Trägerplatte 11 gehoben werden.

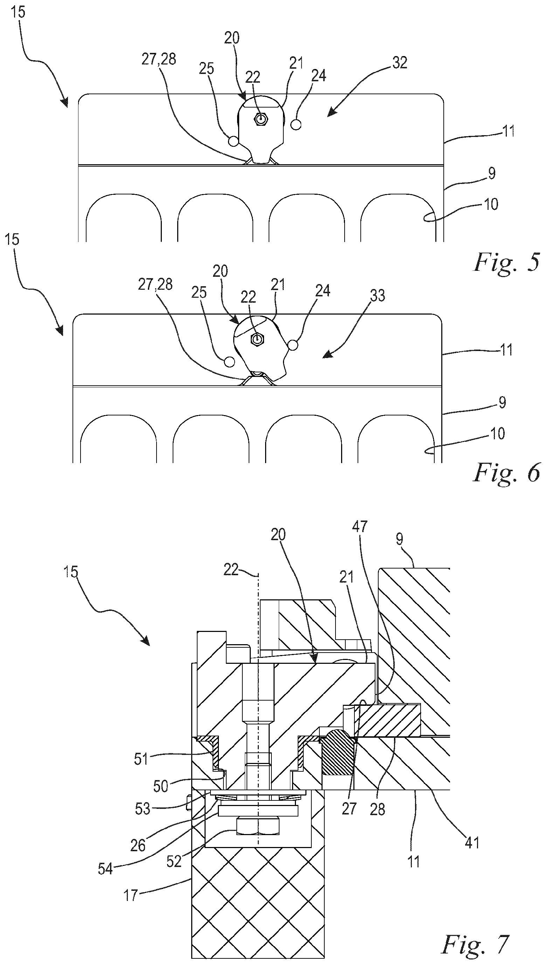

Wie insbesondere in den Figuren 5 und 6 gezeigt, umfasst die Befestigungsvorrichtung 20 einen ersten Anschlag 24 und einen zweiten Anschlag 25. Die Anschläge 24, 25 begrenzen die Schwenkbewegung der Klemmeinheit 21. Wird die Klemmeinheit 21 in die erste Schwenkrichtung 23 (Fig. 4) geschwenkt, kommt diese an dem zweiten Anschlag 25 zur Anlage, wobei die Klemmeinheit 21 dann in die Sperrstellung 32 geschaltet ist. Wird die Klemmeinheit 21 in die zweite Schwenkrichtung 23' (Fig. 4) geschwenkt, kommt diese an dem ersten Anschlag 24 zur Anlage, wobei die Klemmeinheit 21 dann in die Freigabestellung 33 geschaltet ist. Zum Schwenken der Klemmeinheit 21 ist auf der Klemmeinheit 21 ein Innensechskant 49 vorgesehen. Die Klemmeinheit 21 ist als ein Klemmbolzen ausgebildet, wobei der Innensechskant koaxial zur Drehachse 22 des Klemmbolzens ausgerichtet ist. Folglich kann der Bediener beispielsweise mit einem Imbusschlüssel die Klemmeinheit 21 in ihre beiden Stellungen schwenken. Es kann in einer alternativen Ausführung der Anordnung 15 auch zweckmäßig sein, anstelle eines Innensechskants 49 eine Bedieneinheit vorzusehen, die ein werkzeugloses Schwenken der Klemmeinheit 21 ermöglicht. In einer solchen Ausführung könnten die Formatplatten 9 ohne Werkzeug von der Trägerplatte 11 gelöst und auf dieser wieder befestigt werden.

Wie in Fig. 7 gezeigt, ist die Haltekontur 27 aus einem Halteelement 28 gebildet. Das Halteelement 28 ist bevorzugt durch eine nicht näher dargestellte Schraubenverbindung an der Formatplatte 9 befestigt. Ferner ist die Klemmeinheit 21 in einer Halteöffnung 50 der Trägerplatte 11 angeordnet. Zwischen der Klemmeinheit 21 und der Halteöffnung 50 der Trägerplatte 11 ist eine Gleitbuche 51 angeordnet, wodurch die Klemmeinheit 21 mit geringer Reibung geschwenkt werden kann. Die Klemmeinheit 21 ist über eine Spannschraube 52 in axialer Richtung gegen die Gleitbuchse 51 gespannt. Ferner umfasst die Befestigungsvorrichtung 20 eine Federeinheit 26, der im Wesentlichen zwei Bedeutungen beizumessen sind. Zum einen sollte die Klemmeinheit 21 nicht zu fest gegen die Gleitbuchse 51 gespannt werden, da andernfalls ein Schwenken der Klemmeinheit 21 nicht mehr möglich ist. Zum anderen muss die Klemmeinheit 21 geringfügig in axialer Richtung verschiebbar sein, damit die Nase 47 der Klemmeinheit 21 auf die Haltekontur 27 aufschwenken bzw. aufgleiten kann. Hierfür ist die Federeinheit 26 zwischen einer ersten Unterlegscheibe 53 und einer zweiten Unterlegscheibe 54 angeordnet. Die erste Unterlegscheibe 53 stützt sich an der Unterseite 41 der Trägerplatte 11 ab. Der Schraubenkopf der Spannschraube 52 wirkt wiederum auf die zweite Unterlegscheibe 54, die wiederum über die Federeinheit 26 gegen die erste Unterlegscheibe 53 abgestützt ist. Folglich übt die Federeinheit 26 eine Vorspannkraft auf die Klemmeinheit 21 in Richtung gegen die Trägerplatte 11 aus. Die Federeinheit 26 umfasst mindestens eine Tellerfeder, vorliegend zwei Tellerfedern, die in einer Parallelschaltung zueinander angeordnet sind. Die Tellerfedern weisen einen besonders kompakten Aufbau auf.

Wie in Fig. 8 gezeigt, umfasst die Anordnung 15 eine Dichtung 14. Die Dichtung 14 dient dazu, eine Leckage zwischen der Formatplatte 9 und der Trägerplatte 11 zu vermeiden. Wie insbesondere in der Fig. 3 gezeigt, sind in der Trägerplatte 11 Vakuumkanäle 55 ausgebildet, die Teil einer Strömungsverbindung zwischen den Matrizenformen 10 und einer nicht näher dargestellten Vakuumquelle sind. Um also einen anliegenden Unterdruck möglichst leckagefrei abdichten zu können, sind die Vakuumkanäle 55 von der Dichtung 14 zwischen der Formatplatte 9 und der Trägerplatte 11 umgeben. Die Dichtung 14 verläuft möglichst randnah an der Formatplatte 9. Die Dichtung 14 ist vorzugsweise als Dichtschnur in Form eines O-Rings ausgebildet. Es kann auch vorgesehen sein, die Dichtung 14 als eine Labyrinthdichtung vorzusehen. Auch andere Dichtungstypen können zweckmäßig sein.

In Fig. 9 ist eine Sicherungsvorrichtung 16 gezeigt, die bevorzugt Teil der Anordnung 15 ist. Die Trägerplatte 11 liegt auf einem Mitnehmer 17 auf, wobei der Mitnehmer 17 über eine nicht näher dargestellte Kette angetrieben ist. Der Mitnehmer 17 sowie die Kette sind ebenfalls Teile des Transporteurs 7. Diese dienen zur Fortbewegung der Trägerplatte 11, und damit auch zur Fortbewegung der Formatplatte 9. Mittels der Sicherungsvorrichtung 16 ist die Trägerplatte 11 auf dem Mitnehmer 17 befestigt. Die Sicherungsvorrichtung 16 ist von einer Betriebsstellung in eine Außerbetriebsstellung schaltbar. In der Betriebsstellung der Sicherungsvorrichtung 16 ist die Trägerplatte 11 an dem Mitnehmer 17 fixiert. In der Außerbetriebsstellung der Sicherungsvorrichtung 16 ist die Trägerplatte 11 von dem Mitnehmer 17 gelöst. In dieser Schaltstellung kann die Trägerplatte 11 von dem Mitnehmer 17 heruntergenommen werden. Die Sicherungsvorrichtung 16 ist besonders bevorzugt werkzeuglos schaltbar. Die Sicherungsvorrichtung 16 umfasst einen Kugelsperrbolzen 18. Die Funktionsweise derartiger, handelsüblicher Kugelsperrbolzen 18 ist aus dem Stand der Technik hinreichend bekannt und bedarf hier keiner weiteren Erläuterung. In dem Mitnehmer 17 ist eine Sicherungskontur 19 vorgesehen, die über eine Spezialhülse in den Mitnehmer 17 eingeschraubt ist. Ist der Kugelsperrbolzen 18 nicht aktiviert, blockiert dieser über Kugelkörper, die in die Sicherungskontur 19 eingreifen, eine Bewegung in Hochrichtung. Wird der Kugelsperrbolzen 18 aktiviert, werden die Kugelkörper eingefahren und sind nicht mehr im Eingriff mit der Sicherungskontur 19. Die Trägerplatte 11 kann folglich von dem Mitnehmer 17 gehoben werden. In der vorliegenden Ausführung sind an der Trägerplatte 11 zwei Sicherungsvorrichtungen 16 vorgesehen, die angrenzend an den Stirnseiten 46 der Trägerplatte 11 angeordnet sind. Selbstverständlich kann in einer alternativen Ausführung der Anordnung 15 auch eine andere Anzahl an Sicherungsvorrichtungen 16 zweckmäßig sein.

## Patentansprüche

1. Anordnung für eine Verpackungsmaschine
umfassend:
eine Formatplatte (9) mit mindestens einer Matrizenform (10),
eine Trägerplatte (11), wobei die Formatplatte (9) auf der Trägerplatte (11) befestigbar ist,
**dadurch gekennzeichnet, dass** die Anordnung (15) mindestens eine in eine Sperrstellung (32) und in eine Freigabestellung (33) schaltbare Befestigungsvorrichtung (20) zur Sicherung der Formatplatte (9) auf der Trägerplatte (11) umfasst, wobei die Befestigungsvorrichtung (20) derart ausgebildet ist, dass die Befestigungsvorrichtung (20) in der Sperrstellung (32) die Formatplatte (9) auf der Trägerplatte (11) fixiert und in der Freigabestellung (33) die Formatplatte (9) von der Trägerplatte (11) löst.

2. Anordnung nach Anspruch 1,
**dadurch gekennzeichnet, dass** die Befestigungsvorrichtung (20) eine Klemmeinheit (21) und eine Haltekontur (27) aufweist, wobei in der Sperrstellung (32) die Klemmeinheit (21) und die Haltekontur (27) in Wirkverbindung stehen, und in der Freigabestellung (33) die Wirkverbindung zwischen der Klemmeinheit (21) und der Haltekontur (27) aufgehoben ist.

3. Anordnung nach Anspruch 2,
**dadurch gekennzeichnet, dass** die Klemmeinheit (21) zwischen der Sperrstellung (32) und der Freigabestellung (33) um eine Drehachse (22) hin und her schwenkbar ist.

4. Anordnung nach Anspruch 2 oder 3,
**dadurch gekennzeichnet, dass** die Befestigungsvorrichtung (20) zwei Anschläge (24, 25) zur Begrenzung der Schwenkbewegung der Klemmeinheit (21) umfasst.

5. Anordnung nach einem der Ansprüche 2 bis 4,
**dadurch gekennzeichnet, dass** der erste Anschlag (24) der zwei Anschläge (24, 25) die Schwenkbewegung der Klemmeinheit (21) in der Freigabestellung (33) und der zweite Anschlag (25) der zwei Anschläge (24, 25) die Schwenkbewegung der Klemmeinheit (21) in der Sperrstellung (32) begrenzen.

6. Anordnung nach einem der Ansprüche 2 bis 5,
**dadurch gekennzeichnet, dass** die Klemmeinheit (21) als Klemmbolzen ausgebildet ist.

7. Anordnung nach einem der Ansprüche 2 bis 6,
**dadurch gekennzeichnet, dass** die Klemmeinheit (21) an der Trägerplatte (11) angeordnet ist.

8. Anordnung nach einem der Ansprüche 2 bis 7,
**dadurch gekennzeichnet, dass** die Klemmeinheit (21) über eine Federeinheit (26) gegen die Trägerplatte (11) gespannt ist.

9. Anordnung nach einem der Ansprüche 2 bis 8,
**dadurch gekennzeichnet, dass** die Haltekontur (27) an der Formatplatte (9) angeordnet ist.

10. Anordnung nach einem der Ansprüche 2 bis 9,
**dadurch gekennzeichnet, dass** die Haltekontur (27) aus einem Halteelement (28) gebildet ist, wobei das Halteelement (28) an der Formatplatte (9) befestigt ist.

11. Anordnung nach einem der Ansprüche 2 bis 10,
**dadurch gekennzeichnet, dass** die Haltekontur (27) einen Vorsprung (48) gegenüber der Formatplatte (9) bildet.

12. Anordnung nach einem der Ansprüche 1 bis 11,
**dadurch gekennzeichnet, dass** zwischen der Formatplatte (9) und der Trägerplatte (11) eine umlaufende Dichtung (14) vorgesehen ist,

13. Anordnung nach einem der Ansprüche 1 bis 12,
**dadurch gekennzeichnet, dass** die Anordnung (15) einen Transporteuer (7) mit einem Mitnehmer (17) zur Fortbewegung der Trägerplatte (11) und der Formatplatte (9) umfasst, und mit einer Sicherungsvorrichtung (16) zur Befestigung der Trägerplatte (11) auf dem Mitnehmer (17) des Transporteurs (7), und wobei die Sicherungsvorrichtung (16) derart ausgebildet ist, dass in einer Betriebsstellung der Sicherungsvorrichtung (16) die Trägerplatte (11) an dem Mitnehmer (17) fixiert ist und in einer Außerbetriebsstellung der Sicherungsvorrichtung (16) die Trägerplatte (11) von dem Mitnehmer (17) gelöst ist.

14. Anordnung nach Anspruch 13,
**dadurch gekennzeichnet, dass** die Sicherungsvorrichtung (16) einen Kugelsperrbolzen (18) umfasst.

15. Anordnung nach Anspruch 14,
**dadurch gekennzeichnet, dass** an dem Mitnehmer (17) des Transporteurs (7) eine Sicherungskontur (19) vorgesehen ist, wobei in der Betriebsstellung (34) der Sicherungsvorrichtung (16) der Kugelsperrbolzen (18) mit der Trägerplatte (11) und der Sicherungskontur (19) derart wirkverbunden ist, dass die Trägerplatte (11) an dem Mitnehmer (17) fixiert ist.
